Europäisches Patentamt

European Patent Office

Office européen des brevets

(19)

(11) **EP 1 478 141 A2**

(12) **EUROPEAN PATENT APPLICATION**

(43) Date of publication:
**17.11.2004 Bulletin 2004/47**

(51) Int Cl.7: **H04L 12/56**

(21) Application number: **04300138.7**

(22) Date of filing: **12.03.2004**

| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventors:<br>• **Thibodeau, Mark**<br>  **Nepean, Ontario K2J 4N4 (CA)**<br>• **Olesinski, Wladyslaw**<br>  **Kanata, Ontario K2M 2L9 (CA)** |
| (30) Priority: **13.03.2003 US 386652** | (74) Representative: **Feray, Valérie et al**<br>**Feray Lenne Conseil** |
| (71) Applicant: **ALCATEL**<br>**75008 Paris (FR)** | **44/52, Rue de la Justice**<br>**75020 Paris (FR)** |

(54) **Improved determination of average queue depth for RED (Random Early Discard)**

(57)     At telecommunications switches and routers, RED (random early packet discard) uses the queue depth to determine whether to keep or discard each packet as it arrives at a queue. This is done by determining a discard probability P(colour), which is dependent on the average depth of the queue, and comparing the discard probability to a random number. The implementation of RED requires calculating the average depth of the queue to which RED is being applied. I n calculating average queue depth, a weight is introduced. The value of the weight affects the amount of weighting that the previous average queue depth is given in relation to the current queue depth in calculating the new average queue depth. The inven tion uses a plurality of weights, depending on the status of the queue so that RED produces better discard operation. In a two-weight scheme, a smaller weight is used for an increasing queue depth and a larger one is used for a decreasing queue depth.

**Description**

**Field of Invention**

The invention resides in the field of alleviating traffic congestion by selectively discarding packets of telecommunications traffic in a communication s switch or router. More particularly, the invention is directed to the problem of calculating average queue depth for RED, particularly in a manner that effectively responds to very rapid increases and decreases in the instantaneous queue depth.

**Background of Invention**

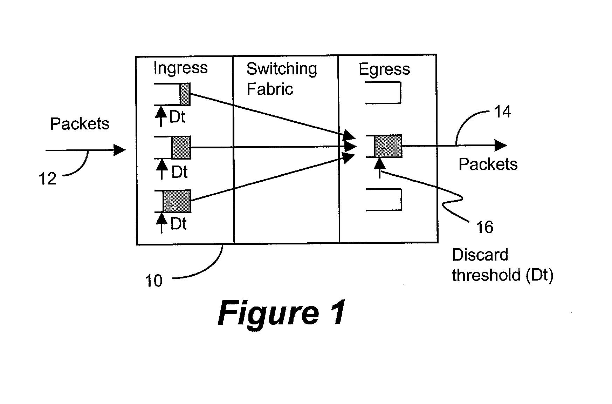

Figure 1 shows a simplified architecture of a communications switch 10 or a router. Packets 12 of traffic arrive at ingress queues and are switched by a switching fabric to egress queues before departing from an output port 14 of the switch. When the depth of packets in any queue exceeds a discard threshold (Dt) 16, packets arriving at that queue may be dropped in accordance with a tail drop procedure. That is, packets at the end of the queue are dropped until the queue depth (also call ed the queue occupancy) recedes below the discard threshold. A problem with this procedure, in the case of TCP connections, is that packets can be dropped from a single TCP connection because of the nature of the protocol.

Another type of discard procedu re, which alleviates the aforementioned problem with TCP connections, is random early packet discard (RED for short). RED uses the queue depth (queue occupancy) to determine whether to keep or discard each packet as it arrives at the queue. This is done by determining a discard probability, which is dependent on the average depth of the queue (also called average queue depth or average queue occupancy), and comparing the discard probability to a random number. If the discard probability is greater than t he random number the packet is discarded.

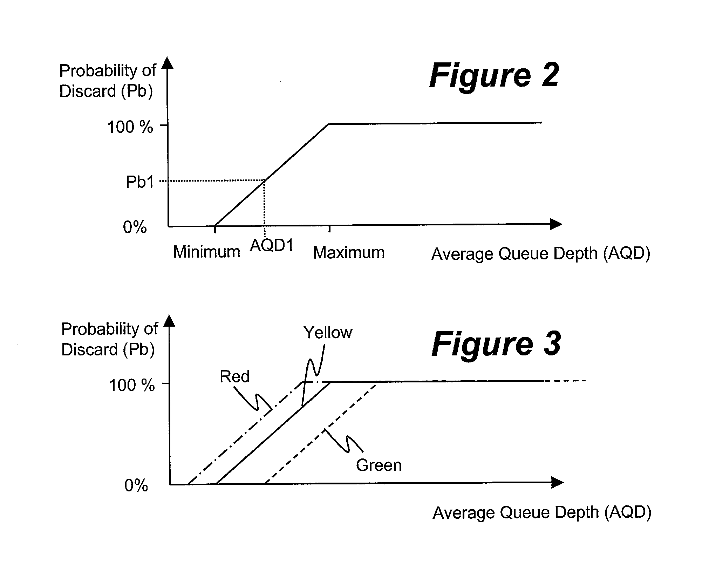

Figure 2 shows a graph of an example discard probability function versus average queue depth. According to this function, the discard probability is zero until a minimum threshold is reached, thereafter the disca rd probability increases linearly until a maximum threshold is reached. For average queue depths greater than the maximum threshold the discard probability is 100%.

Figure 3 shows graphs of discard probability functions for a variation of RED, known as, weighted RED. In this case, there are three discard probability functions (green, yellow, and red) and each will result in a different discard probability for the same average queue depth. The particular discard probability function that is used for a pa cket depends on the drop precedence (colour) of the packet. The drop precedence (DP) is determined by examining the DiffServ Code Point (DSCP) field in the IP header of the packet. Packets that exceed agreements on their connections have their drop prece dence (colour) changed by an IP policing procedure. As with the RED procedure, in weighted RED the determination to keep or discard a packet is made by comparing the discard probability of the packet to a random number, discarding the packet when the prob ability exceeds the number. Variations of this procedure include having more discard probability functions, and having different probability curves in accordance with a class of service (CoS) to which the packet belongs. The CoS of a packet is also deter mined by examining the DSCP field in the IP header.

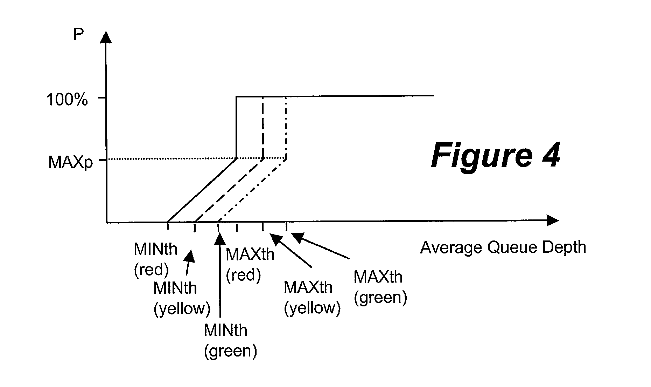

Figure 4 shows another example of weighted RED with the discard probability functions having shapes that are generally accepted to work well. The figure includes three graphs for three colours. For each colour, its function provides the discard probability that increases linearly from 0% to MAXp, as the average queue depth increases from its minimum threshold (MINth) to its maximum threshold (MAXth). Above MAXth, the discard probability is 100%. Differ ent vendors and different drop precedence (colour) functions will have different values for MAXp, MINth, and MAXth shown in the figure. In the figure, MAXp, which is less than 100%, is same for all the colours. Discard probability functions having differ ent shapes and curves are possible.

It is therefore summarized that whether a packet arriving to the RED system is queued or dropped depends on the current discard probability and the colour (relative priority) of the packet. Discard probability, in turn , depends on the average queue depth. These relations can be formalized as follows.

$$\text{New } N_{avg} = \text{Previous } N_{avg} + W \times (N_{cur} - \text{Previous } N_{avg}) \tag{1}$$

$$P(cotour) = F_{colour}(\text{New } N_{avg}) \tag{2}$$

$N_{avg}$ is the average queue depth, and $0 < W < 1$ is a moving averag e weight that determines how closely the average follows the actual (current) queue depth $N_{cur}$. If W is small, the average will lag behind the actual queue depth; conversely, the average will follow closely the actual queue depth when W is large. P is a discard probability, different for every colour of a packet (colour $\in$ {red, yellow, green}), and $F(N_{avg})$ is a linear discard probability function that returns values that depend on the colour and the average queue depth. Figures 2-4 give some example functions.

As previously mentioned, the determination of whether to discard or keep a packet is made by comparing the discard probability of the packet to a random number (RN). There are two common methods for selecting and comparing a ra ndom number, or random variable, to the discard probability. These methods are the geometric random variable (GRV) method and the uniform random variable (URV) method.

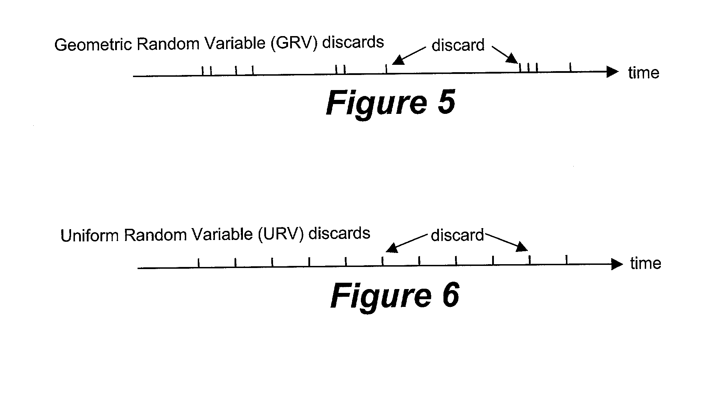

Figures 5 and 6 show a comparison of the results of the GRV and URV methods with a con stant average queue depth. Figure 5 is the GRV method and Figure 6 is the URV method. In the figures the horizontal lines depict time and the small vertical lines depict packet discards. According to the geometric random variable (GRV) method, a new ran dom number is selected for each packet arriving at a queue. If the discard probability for the packet exceeds the random number then the packet is discarded. As Figure 5 shows, the resulting discards are randomly distributed in time. The URV method, on t he other hand, selects a new random number only after a packet has been discarded. The URV method, therefore, counts the number of packets (count) since the last discard and multiplies the count by the discard probability. If the resulting product is gre ater than the random number then the packet is discarded, the count set to zero, and a new random number is generated. Otherwise the packet is accepted and the count is incremented.

<u>URV algorithm:</u>
Initialize packet count=0;
IF (packet count $\times$ P(colour))>RN), THEN

{
discard the packet;
get a new RN;
packet count=0;
}
Else
{
accept the packet;
increment packet count (i.e., packet count=packet count+1)
}

It has been shown that URV method gives a better performance than GRV method because it usually achieves a more uniform distribution of packet discards over time, as seen in Figure 6. This is desirable because if too many packets are discarded consecutively and/or intervals between accepted packets are long, a global synchronization with several connections may occur, resulting in reduction of their windows at the same time.

Although the URV method provides the desirable result of uniformly distributing packet discards in time, it requires an additional multiply operation over the GRV method. This extra multiply operation takes a significant amount of processing time. As an example, assume that a typical network processor has 56 cycles to process a 40-byte packet at 9.14Gbps (equivalent to OC -192) rate. Each multiplication operation takes 6 cycles to complete. This yields a total of 12 cycles for the multiplication part of the discard calculations. A problem with this approach is that, in the case of packets arriving at OC-192 rate, the URV discard procedure leaves only 44 cycles for the remainder of the discard processing, such as threshold checking, given the processors currently available today. At these rates, every cycle is precious and new ways need to be found to conserve them.

Furthermore, to perform RED algorithm, discard pro bability P(colour), which depends on average queue depth $N_{avg}$, must be calculated by using formulae (1) and (2). There are several ways of calculating formulae (1) and (2). Two common variations are described here, i.e., "background method" and "arrival method". In the first method, a background process is invoked every T seconds. This process calculates average queue depth and discard probability using formulae (1) and (2) respectively. The obtained values are then used to determine a fate of every pa cket that arrives to the system during the next T seconds. After that time, the background process is called again, the current queue depth is fetched, and new average queue depth and discard probability are computed. In the second method, on the other h and, average queue depth and discard probability are not calculated periodically but every time a packet arrives to the system. Again, formulae (1) and (2) above are used for the calculations and the packet is either accepted or discarded based on the calculated value of discard probability. Whichever method is used, either URV or GRV procedure described above can be employed to perform accept/discard action.

When using "the arrival method", however, there may be an additional problem in calculating average queue depth after idle times, i.e., when the queue is empty.

Applicant's another application filed concurrently herewith describes an improved technique of performing URV scheme of RED more efficiently without shortcomings mentioned above. According to the technique described therein, the discard probabilities are summed for each colour, instead of counting the number of packets (count) and multiplying that by the current discard probability P(colour), as in the prior art. The resulting sum is compared to the random number to perform discard/accept operation.

As mentioned earlier, when calculating the average queue depth using formula (1), the low weight W means that the average queue depth will slowly react to changes of the actual queue depth. Thi s is beneficial when the queue grows. The average on the basis of which the RED algorithm makes a discard decision lags behind the actual queue depth. This means that temporary bursts of traffic that suddenly fill the queue will not trigger excessive dis cards because the (average) queue depth perceived by the algorithm is still low. This property of low weight, however, loses its appeal when the queue depth drops. When that happens, it is desirable that the average queue depth follows closely the actual queue depth so that the packet loss is minimized.

The present invention provides novel ways of calculating the average queue depth which produce more desirable characteristics, whether the queue depth is increasing or decreasing, resulting in better perf ormance of RED.

**Summary of Invention**

In accordance with one aspect, the invention is directed to an improved technique of selectively discarding packets of traffic depending on the fill level, or depth, of queues in the communications switch.

According to yet another aspect, the invention uses the summed discard probabilities, instead of counting the number of packets (count) and multiplying that by the current discard probability, as in the prior art. The resulting sum is compared to the random number for discard operation.

In accordance with yet another aspect, the invention provides a better way of calculating average depth of a queue to help RED to perform more effectively.

In accordance with a further aspect the invention is directed to a RED implementation. The implementation of RED requires calculating the average depth of the queue to which RED is being applied. In calculating average queue depth, a weight is introduced. The invention uses a plurality of weights to be used depending on the st atus of the queue.

In two-weight scheme, there are two weights. A smaller weight is used for an increasing queue depth, and a larger one is used for a decreasing queue depth.

According to a more specific aspect, the invention is directed to a method of continuously calculating an average depth of a queue in the telecommunications system. The method includes steps of measuring a current queue depth, $N_{cur}$, and calculating an average queue depth, $N_{avg}$. The method further includes steps of monitoring the s tatus of the queue and updating the average queue depth, $N_{avg}$, by the following formula,

$$\text{New } N_{avg} = \text{Previous } N_{avg} + W \times (N_{cur} - \text{Previous } N_{avg})$$

wherein W is a running weight and takes a plurality of different values depending upon the status of the queue.

In accordance with a further aspect, the invention is directed to a method of controlling a queue of a communications system by a random early packet discard procedure. The method comprises steps of receiving a packet at the queue and decid ing an accept/discard action on the packet based on a discard probability for the packet. The method further includes steps of determining a new discard probability for the next packet based on the average depth of the queue, and calculating the average d epth of the queue by the following formula,

$$\text{New } N_{avg} = \text{Previous } N_{avg} + W \times (N_{cur} - \text{Previous } N_{avg})$$

wherein $N_{avg}$ is the average queue depth, $N_{cur}$ is a current queue depth, W is a running weight which takes a plurality of different values depen ding upon the status of the queue.

In a further aspect, the invention uses a step of comparing $N_{cur}$ and $N_{avg}$ to determine whether the queue is increasing or decreasing.

**Brief Description of Drawings**

Figure 1 is a schematic illustration of a packet switc h or router.

Figure 2 is a graph of an example discard probability (P) function versus average queue depth.

Figure 3 shows graphs of example discard probability functions for another discard procedure known as weighted RED.

Figure 4 shows a graph of a d iscard probability function having a shape that is generally accepted to work well.

Figures 5 and 6 show the results of the GRV (geometric random variable) and URV (uniform random variable) methods with a constant average queue depth.

Figure 7 are graphs of actual queue depth and calculated average queue depths, illustrating the shortcomings of the known technique.

Figure 8 are graphs of actual queue depth and average queue depths expected by using the invention.

Figure 9 shows simulation results of the average queue depth and actual queue depth, using the known algorithm on a non -responsive stream.

Figure 10 shows simulation results of the average queue depth and actual queue depth, using the algorithm on a non -responsive stream in accordance with one embodiment of the invention.

Figure 11 shows simulation results of the average queue depth and actual queue depth, using the known algorithm on two responsive streams.

Figure 12 shows simulation results of the average queue depth and actual queue depth, using the algorithm on two responsive streams in accordance with one embodiment of the invention.

Figure 13 is a schematic illustration of the discard mechanism in which the algorithm of the invention can be used.

**Detailed Description of Embodiments of Invention**

As mentioned earlier, it has been recognized that in performing RED, one value of W will not give the desired characteristics for calculating average queue depth. It is now realized that two or more weight values may be used for calculating the average queue depth, depending upon the status of the queue so that packet discards by RED are minimized.

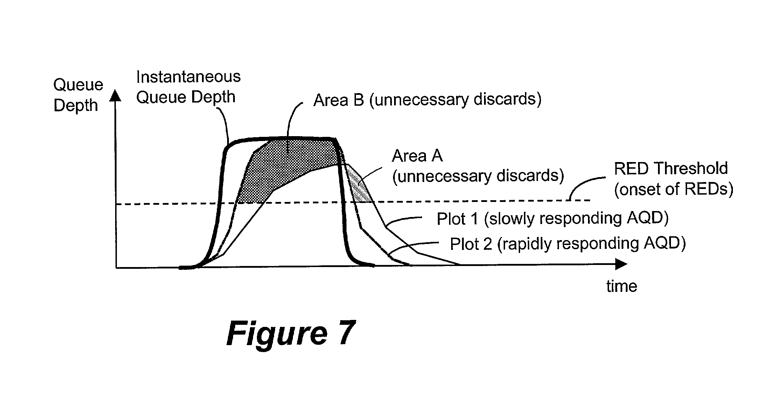

In accordance with an embodiment, the invention uses different values of weight, depending on the dynamics of the queue occupancy, which are more suitable for calculating the average queue depth more correctly. Figure 7 shows two plots, plots 1 and 2, of the average queue depth calculated by formula (1) using two different values of W. As mentioned earlier, the value of W affects the amount of weight ing that the previous average queue depth is given in relation to the current (instantaneous) queue depth in calculating the new average queue depth. The instantaneous queue depth is also shown as a reference. The plots are displayed as average/instantan eous queue depth versus time.

In calculating the average queue depth of plot 1, a smaller value of W was used than in calculating the average queue depth of plot 2. The effect is that the average queue depth shown in plot 1 is slower to respond to change s in the instantaneous queue depth than the average queue depth of plot 2. As seen in the figure, using either value of W alone would have a disadvantage of resulting in unnecessary packet discards. Specifically, the area labeled "A" shows unnecessary di scards with respect to plot 1, and the area labeled "B" shows unnecessary discards with respect to plot 2. In the case of area "A", the discards are unnecessary because, had the average queue depth responded more quickly to the decrease in queue depth (as did plot 2), then discards would not have occurred. In the case of area "B", the discards are unnecessary because, had the average queue depth responded more slowly to the rapid increase in queue depth (as did plot 1), then the discards would not have occurred. This error in the determination of the average queue depth could lead to needless discard of packets, which is undesirable. Solving these disadvantages is particularly important to effectively respond to bursty traffic, which is the nature of muc h IP traffic.

According to one embodiment of the invention, in calculating the average queue depth, by using aforementioned formula (1) reproduced below, two different weights, Wi and Wd, (Wi<=Wd) are applied to the previous value of the average queue dep th.

$$\text{New } N_{avg} = \text{Previous } N_{avg} + W \times (N_{cur} - \text{Previous } N_{avg})$$

High weight, Wd, is used when the queue depth is decreasing and low weight, Wi, is used when the queue depth is increasing.

A background process that calculates the average queue dep th and discard probability, P, performs another operation, that is, to compare the previous average queue depth, $N_{avg}$, with the current queue depth, $N_{cur}$. If $N_{cur} > N_{avg}$, then the queue depth is increasing and formula (1) uses weight Wi to calculate the average queue depth. Otherwise, i.e., if $N_{cur} <= N_{avg}$, weight Wd is used.

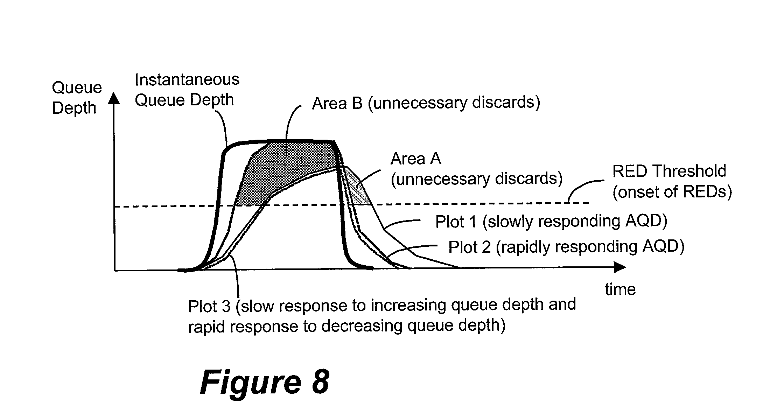

Figure 8 shows graphs of the queue depth which the present invention is expected to produce in calculating the average queue depth, using two weight values.

One specific embodiment of the invention calls for two weights: W and 1-W, either for increasing queue or decreasing queue, depending upon the value of W. For a more specific example, weight W is $1/2^M$, M>0. Other weight values can be contemplated, for example, $1/3^M$ or $1/2^{2M}$, but $1/2^M$ is presently an industry standard practice.

The novel technique of calculating the average queue depth is applicable to any RED schemes to realize a benefit of more efficient discard operation. It is however noted that the novel scheme of RED describ ed in the above-mentioned application can also incorporate the present invention. As mentioned earlier, the application describes the novel RED scheme in which the discard probabilities are summed for each colour, instead of counting the number of packets (count) and multiplying that by the current discard probability P(colour), as in the prior art. The resulting sum (discard probability sum or $P_{sum}$(colour)) is compared to the random number (RN). If $P_{sum}$(colour) is greater than RN then the packet is disc arded and $P_{sum}$(colour) is set to zero, otherwise the packet is accepted and the new discard probability P(colour) is added to $P_{sum}$(colour) (i.e., $P_{sum}$(colour)=$P_{sum}$(colour)+P(colour)). The result is packet discards for each colour that are uniformly distri buted in time similar to the prior art URV method, but requires 50% less processing cycles to implement. This improvement in efficiency allows uniformly distributed packet discards to be achieved on OC -192 rate connections.

The above discard algorithm ca n therefore be written as follows:

```
Initialize=0
IF (Psum(colour)>RN) then
{
discard packet;
Psum(colour)=0;
get a new RN;
}
ELSE
{
accept packet;
Psum(colour)=Psum(colour)+P(colour)
}
```

Simulations were conducted for the traditional single -weight method and the double-weight method of the present invention to see how the occupancy and packet loss compare. OPNET is used to simulate a simple scenario in which a single non -responsive (UDP) stream is processed by the RED system. The capacity of the system is 5 85kb/s (equivalent to OC12). Queue threshold, MINth for the red traffic is set at 44,000B. This means that as long as the queue depth is below 44,0008, no packets are discarded. Above that threshold, a discard probability increases linearly up to 1.0 (1 00%) for the depth of MAXth of 620,000B.

A UDP traffic source sends red packets at the following rates:

- 1170kb/s (twice the capacity of the system) for 2 seconds,
- 585kb/s (the capacity of the system) for 15 seconds,
- 0kb/s (idle) for 3 seconds.

Then, the whole cycle is repeated. The background process that calculates a discard probability and average queue depth is called twice a second. Therefore, for the first 2 seconds of each cycle, the queue depth will sharply grow. Then, it will slowly decrea se and finally, it will drop to 0.

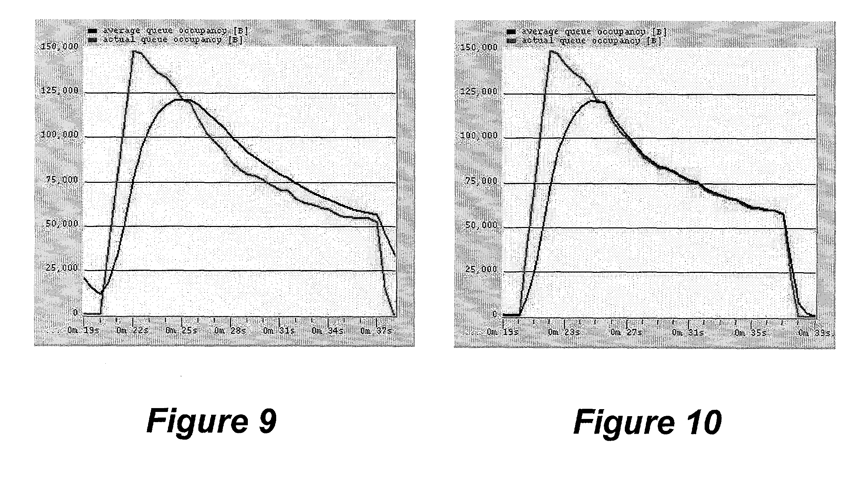

Figures 9 and 10 show simulation results of the average queue depth and actual queue depth in the environment described above. The weight W used to calculate the moving average is 0.25. Figure 9 shows the single - weight RED which uses this value all the time, while Figure 10 shows the results of double-weight algorithm of the present invention which uses the value only when the queue depth increases. When the queue depth drops, weight 1-W=0.75 is used. The figures clea rly show that when the queue depth increases, both algorithms behave similarly, with the average queue depth lagging behind the actual queue depth. However, when the queue depth drops, the average queue depth in the single -weight RED still lags behind assuming values larger than the current queue depth. The average queue depth in the double-weight RED, on the other hand, closely follows the actual queue depth. This difference in the behaviour helps double weight RED to achieve a lower packet loss. In a simulation of the above source sending traffic for 80 seconds, about 6% less packets were dropped by the double - weight RED than by the traditional, single -weight RED.

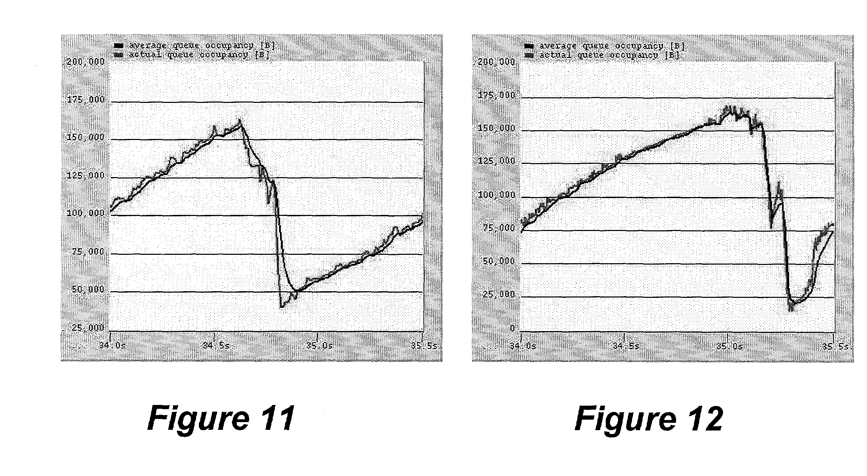

Similar results were observed in a more realistic scenario involving two TCP/IP streams in Figures 11 and 12. In this observation, the capacity of the system is 2.34Gb/s (equivalent of OC48). Queue threshold for the red traffic is set at 144,000B. The process that calculates a discard probability and average queue depth is called every 10m s. As before, a single-weight RED uses weight W=0.25, while the double -weight algorithm uses 0.25 or 0.75, depending on the occupancy changes. Like in the non -responsive case, the two algorithms behave similarly when the queue depth increases. When the queue depth drops, however, the average queue depth in the double -weight algorithm follows closer the actual queue depth.

The complexity of a double-weight RED algorithm is not much higher than that of the single weight algorithm. The algorithm of the in vention still requires one value of weight, in the case when W and 1 -W are used. The only additional complexity lies in a single condition that compares the average queue depth with the current (actual) queue depth.

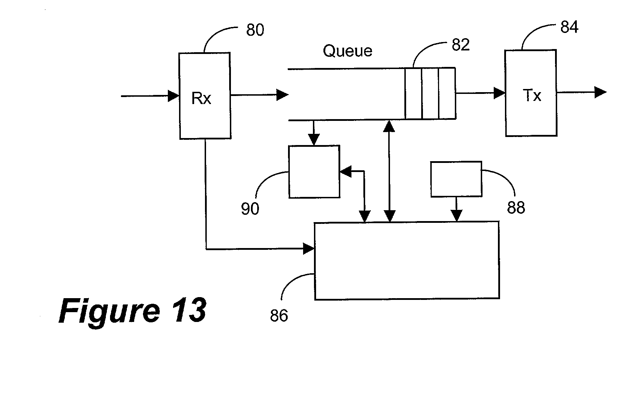

Figure 13 is a schematic illustration of a discard mechanism according to the above-described embodiment of the invention. The figure only shows one queue associated with a variety of modules. It should be noted that a plurality of queues are in a switch or a router and they may share some o r all modules. In the figure, a receiver 80 receives a packet and sends over to the queue 82 for storage from which a transmitter 84 transports a stored packet downstream. The receiver checks the drop precedence (colour) of the packet, if there are more than one level of precedence. A discard probability calculation module 86 continuously monitors the queue depth. It also calculates average queue depth and determines discard probability. The discard probability calculation module further makes a decisi on of accept/discard the packet in response to comparison between the discard probability for the colour of the packet and a random number obtained from random number generator 88. Discard module 90 drops off the packet from the tail of the queue when instructed by the discard probability calculation module.

The invention provides a more accurate technique of calculating the average queue depth for periods of short idle time, thereby preventing unnecessary discards that could otherwise result. It is impo rtant that RED responds to rapid changes in queue depth more effectively, thereby reducing unnecessary packet discards. The invention makes RED more adaptive to bursty traffic.

**Claims**

1. In performing a random early packet discard procedure in a telecommunications system, a method of calculating an average depth of a queue in the telecommunications system, comprising steps of:

   measuring a current queue depth, $N_{cur}$;
   calculating an average queue depth, $N_{avg}$;
   monitoring the status of the queue;
   updating the average queue depth, $N_{avg}$, by the following formula,

   $$\text{New } N_{avg} = \text{Previous } N_{avg} + W \times (N_{cur} - \text{Previous } N_{avg})$$

   wherein W is a running weight and takes a plurality of different values depending upon the status of the queue.

2. The method according to claim 1, wherein
   the step of monitoring the status of the queue determines if the queue is increasing or decreasing;

updating the average queue depth by the following formula,

$$\text{New } N_{avg} = \text{Previous } N_{avg} + W \times (N_{cur} - \text{Previous } N_{avg})$$

wherein W is either Wi or Wd, and Wi<=Wd, Wi being used when the queue is increasing and Wd being used when the queue is decreasing.

3. The method according to claim 2, further comprising a step of:

   comparing $N_{cur}$ and $N_{avg}$ to determine whether the queue is increasing or decreasing.

4. The method according to claim 3, wherein W i is $1/2^M$, M>0 and Wd is 1-Wi.

5. The method according to claim 4, wherein Wi and Wd are adjusted appropriately within their respective limits as the queue is either increasin g or decreasing.

6. The method according to claim 3, wherein there are a plurality of level of drop precedence in the random early packet discard procedure, the method further comprising steps of:

   reading a level of drop precedence of a packet arriving a t the queue, and
   determining a discard probability applicable to the packet of said level of drop precedence based on the average queue depth, $N_{avg}$.

7. The method according to claim 4, wherein there are a plurality of levels of drop precedence in the ran dom early packet discard procedure, the method further comprising steps of:

   reading a level of drop precedence of a packet arriving at the queue, and
   determining a discard probability applicable to the packet of said level of drop precedence based on the average queue depth, $N_{avg}$.

8. The method according to claim 5, wherein there are a plurality of levels of drop precedence in the random early packet discard procedure, the method further comprising steps of:

   reading a level of drop precedence of a packe t arriving at the queue, and
   determining a discard probability applicable to the packet of said level of drop precedence based on the average queue depth, $N_{avg}$.

9. A method of controlling a queue of a communications system by a random early packet discard procedure, comprising steps of:

   receiving a packet at the queue;
   deciding an accept/discard action on the packet based on a discard probability for the packet;
   determining a new discard probability for the next packet based on the average depth of the queue, and
   calculating the average depth of the queue by the following formula,

$$\text{New } N_{avg} = \text{Previous } N_{avg} + W \times (N_{cur} - \text{Previous } N_{avg})$$

   wherein $N_{avg}$ is the average queue depth, $N_{cur}$ is a current queue depth, W is a running weight which takes a plurality of different values depending upon the status of the queue.

10. The method according to claim 9, further comprising steps of:

   monitoring the status of the queue, and
   calculating the average depth of queue by said formula, using different value of W depending on the status of the queue.

11. The method according to claim 10, wherein there are a plurality of levels of drop precedence in the random early packet discard procedure
reading a level of drop precedence of a packet arriving at the q ueue, and
determining a discard probability applicable to the packet of said level of drop precedence based on the average queue depth, $N_{avg}$.

12. The method according to claim 11 wherein the discard probability is determined by the following formula,

$$P(colour)=F_{colour}(N_{avg})$$

wherein the levels of drop precedence are expressed in different colours, P(colour) is a discard probability for a colour and $F_{colour}(N_{avg})$ is a linear discard probability function for a colour that returns values that depend on the c olour and the average queue depth.

13. The method according to claim 12, wherein for each colour, the discard probability is a discard probability sum and is the summation of discard probabilities of all packets that have arrived at the queue since a pack et was last discarded from the queue.

14. The method according to claim 10, wherein
the step of monitoring the status of the queue includes a step of comparing $N_{cur}$ and $N_{avg}$ to determine whether the queue is increasing or decreasing;
updating the averag e queue depth by the following formula,

$$New\ N_{avg}=Previous\ N_{avg}+W\times(N_{cur}-Previous\ N_{avg})$$

wherein W is either Wi or Wd, and Wi<=Wd, Wi being used when the queue is increasing and Wd being used when the queue is decreasing.

15. The method according to claim 14, wherein Wi is $1/2^M$, M>0 and Wd is 1-Wi.

16. The method according to claim 15, wherein Wi and Wd are adjusted appropriately within their respective limits as the queue is either increasing or decreasing.

17. The method according to claim 11, wherein
the step of monitoring the status of the queue includes a step of comparing $N_{cur}$ and $N_{avg}$ to determine whether the queue is increasing or decreasing;
updating the average queue depth by the following formula,

$$New\ N_{avg}=Previous\ N_{avg}+W\times(N_{cur}-Previous\ N_{avg})$$

wherein W is either Wi or Wd, and Wi<=Wd, Wi being used when the queue is increasing and Wd being used when the queue is decreasing.

18. The method according to claim 17, wherein Wi is $1/2^M$, M>0 and Wd is 1-Wi.

19. The method according to claim 18, wherein Wi and Wd are adjusted appropriately within their respective limits as the queue is either increasing or decreasing.

20. The method according to claim 12, wherein
the step of monitoring the status of the que ue includes a step of comparing $N_{cur}$ and $N_{avg}$ to determine whether the queue is increasing or decreasing;
updating the average queue depth by the following formula,

$$New\ N_{avg}=Previous\ N_{avg}+W\times(N_{cur}-Previous\ N_{avg})$$

wherein W is either W i or Wd, and Wi<=Wd, Wi being used when the queue is increasing and Wd being used when the queue is decreasing.

21. The method according to claim 20, wherein Wi is $1/2^M$, M>0 and Wd is 1-Wi.

22. The method according to claim 21, wherein Wi and Wd are adju sted appropriately within their respective limits as the queue is either increasing or decreasing.

23. The method according to claim 13, wherein
    the step of monitoring the status of the queue includes a step of comparing $N_{cur}$ and $N_{avg}$ to determine whether the queue is increasing or decreasing;
    updating the average queue depth by the following formula,

$$\text{New } N_{avg} = \text{Previous } N_{avg} + W \times (N_{cur} - \text{Previous } N_{avg})$$

wherein W is either Wi or Wd, and Wi<=Wd, Wi being used when the queue is increasing and Wd being used when the queue is decreasing.

24. The method according to claim 23, wherein Wi is $1/2^M$, M>0 and Wd is 1-Wi.

25. The method according to claim 24, wherein Wi and Wd are adjusted appropriately within their respective limits as the queue is either increasing or decreasing.

Figure 1

## Figure 2

Probability of Discard (Pb)

100 %

Pb1

0%

Minimum   AQD1   Maximum   Average Queue Depth (AQD)

## Figure 3

Probability of Discard (Pb)

Yellow

Red

100 %

Green

0%

Average Queue Depth (AQD)

EP 1 478 141 A2

P

100%

MAXp

MINth
(red)

MINth
(yellow)

MINth
(green)

MAXth
(red)

MAXth
(yellow)

MAXth
(green)

Average Queue Depth

*Figure 4*

Geometric Random Variable (GRV) discards

discard

time

## Figure 5

Uniform Random Variable (URV) discards

discard

time

## Figure 6

EP 1 478 141 A2

EP 1 478 141 A2

Queue Depth

Instantaneous Queue Depth

Area B (unnecessary discards)

Area A (unnecessary discards)

RED Threshold (onset of REDs)

Plot 1 (slowly responding AQD)

Plot 2 (rapidly responding AQD)

time

**Figure 7**

Queue Depth

Instantaneous Queue Depth

Area B (unnecessary discards)

Area A (unnecessary discards)

RED Threshold (onset of REDs)

Plot 1 (slowly responding AQD)

Plot 2 (rapidly responding AQD)

Plot 3 (slow response to increasing queue depth and rapid response to decreasing queue depth)

time

*Figure 8*

Figure 9

Figure 10

Figure 12

Figure 11

*Figure 13*